# EUROPEAN PATENT APPLICATION

(11) **EP 4 019 718 A1**
(43) Date of publication of application: **29.06.2022**
(21) Application number: 20854177.1
(22) Date of filing: 04.08.2020
(51) Int. Cl.: E05B 47/00, E05B 29/10, E05B 19/00, E05B 15/00, E05B 15/14

(54) **LOCK CYLINDER AND UNLOCKING KEY**

(30) Priority: 21.08.2019 CN 201910774817
(71) Applicant: Zhuhai Utaiot Technology Co., Ltd., Zhuhai, Guangdong 519000 (CN)
(72) Inventor: JIN, Shuqiang, Zhuhai, Guangdong 519000 (CN); LI, Baofu, Zhuhai, Guangdong 519000 (CN); YANG, Shaohua, Zhuhai, Guangdong 519000 (CN); LI, Qiping, Zhuhai, Guangdong 519000 (CN); HE, Haixiong, Zhuhai, Guangdong 519000 (CN); ZHANG, Xiaoming, Zhuhai, Guangdong 519000 (CN)
(74) Representative: Novagraaf Technologies
(86) International application number: PCT/CN2020/106829
(87) International publication number: WO 2021/031845

(57) **Abstract**

Provided are a lock cylinder and an unlocking key. The lock cylinder includes: a lock housing; a lock core, herein the lock core is rotatably arranged in the lock housing; a locking member, herein the locking member is movably arranged between the lock core and the lock housing and provided with a locking position and an unlocking position; a locking blade, herein the locking blade is movably connected to the lock core and capable of stopping or avoiding the movement of the locking member so as to lock or unlock the locking member; a driving assembly, herein at least part of the driving assembly is movably arranged relative to the locking member, and the driving assembly is capable of stopping or avoiding the movement of the locking member so as to lock or unlock the locking member; and a driving control blade, herein the driving control blade is movably connected to the lock core and provided with a stopping position or an avoiding position, while the driving control blade is located at the stopping position, the driving control blade stops the movement of the driving assembly, and while the driving control blade is located at the avoiding position, the driving control blade avoids the movement of the driving assembly. The present invention solves a problem in a related art that the security of the lock cylinder is low.

## Description

### Technical Field

The present invention relates to the technical field of locks, in particular to a lock cylinder and an unlocking key.

### Background

At present, the unlocking of a dual authentication lock cylinder on the market usually adopts mechanical and electronic independent controls. As long as one of them is unlocked, a lock may be unlocked. At the same time, a motor unlocking part is exposed in a key hole, and a special mechanical tool may be used to unlock the motor unlocking part, thereby the door lock may be opened, so that the safety of the lock cylinder is low. In addition, while an electronic key of the lock cylinder is out of power or has an error, and a motor fails, the lock cylinder may not be normally unlocked electrically, or may not be normally unlocked mechanically, so that the use is affected because the lock cylinder may not be unlocked under special circumstances.

### Summary

Some embodiments of the present invention provide a lock cylinder and an unlocking key, as to solve a problem in a related art that the security of the lock cylinder is low.

In order to achieve the above purpose, according to an optional embodiment of the present invention, a lock cylinder is provided, including: a lock housing; a lock core, herein the lock core is rotatably arranged in the lock housing; a locking member, herein the locking member is movably arranged between the lock core and the lock housing and provided with a locking position and an unlocking position, while the locking member is located at the locking position, a part of the locking member is stretched into the lock housing, and another part of the locking member is stretched into the lock core, as to hinder a relative rotation between the lock housing and the lock core, and while the locking member is located at the unlocking position, the locking member exits from the lock housing, and is retracted into the lock core, and the lock housing and the lock core is configured to rotate rotated relative to each other; a locking blade, herein the locking blade is movably connected to the lock core and capable of stopping or avoiding a movement of the locking member so as to lock or unlock the locking member; a driving assembly, herein at least part of the driving assembly is movably arranged relative to the locking member, and the driving assembly is capable of stopping or avoiding the movement of the locking member so as to lock or unlock the locking member; and a driving control blade, herein the driving control blade is movably connected to the lock core and provided with a stopping position or an avoiding position, while the driving control blade is located at the stopping position, the driving control blade stops the movement of the driving assembly, as to lock the driving assembly in the position of stopping the locking member, and while the driving control blade is located at the avoiding position, the driving control blade avoids the movement of the driving assembly, so that the driving assembly may be moved freely.

In an optional embodiment, the lock cylinder further includes an emergency unlocking blade, and the emergency unlocking blade is movably arranged in the lock core and is configured to press the driving assembly, as to drive the driving assembly to be switched from the position of stopping the locking member to the position of avoiding the locking member.

In an optional embodiment, the driving assembly is provided with a stopping protrusion, and the emergency unlocking blade is provided with an extension arm, and the extension arm is configured to press the stopping protrusion, as to move the driving assembly to the position of avoiding the locking member.

In an optional embodiment, the extension arm has a pressing inclined surface which contacts and cooperates with the stopping protrusion, and while the unlocking key drives the emergency unlocking blade to move, the pressing inclined surface presses the stopping protrusion, as to drive the driving assembly to move to the position of avoiding the locking member.

In an optional embodiment, a first end of the extension arm is connected to an outer edge of the emergency unlocking blade, and a second end of the extension arm is extended towards a direction away from the outer edge of the emergency unlocking blade, and a gap is formed between the extension arm and the outer edge of the emergency unlocking blade, the stopping protrusion is located in the gap, and an inner wall surface, close to the gap, of the extension arm serves as the pressing inclined surface.

In an optional embodiment, the driving assembly is provided with the stopping protrusion, the driving control blade is provided with a stopping portion, and while the driving control blade is located at the stopping position, the stopping portion is located on a movement path of the stopping protrusion, as to hinder the movement of the driving assembly, and while the unlocking key drives the driving control blade to move to the avoiding position, the stopping portion no longer hinders the movement of the stopping protrusion, and the driving assembly is configured to rotate freely.

In an optional embodiment, the stopping portion has an inclined surface structure, and while the driving control blade is moved from the avoiding position to the stopping position, the inclined surface structure presses the stopping protrusion, as to move the driving assembly to the position of stopping the locking member.

In an optional embodiment, both the driving control blade and the emergency unlocking blade have a blade unlocking hole into which the unlocking key is inserted and a driving end located in the blade unlocking hole, the unlocking key is inserted into the blade unlocking hole and presses the driving end, as to drive at least one of the driving control blade and the emergency unlocking blade to move.

In an optional embodiment, the driving ends of the driving control blade and the emergency unlocking blade are located on a same side of a circumferential of an inner wall of the blade unlocking hole or respectively located on two opposite sides of the circumferential of the inner wall of the blade unlocking hole.

In an optional embodiment, the driving assembly includes: a driving motor; a cam, herein the cam has a stopping protrusion, a circumferential surface of the cam has a receiving concave portion into which the locking member is stretched, the cam is drivingly connected with the driving motor, the driving motor may drive the cam to rotate, and the receiving concave portion is switched between positions aligned and misaligned with the locking member, and while the receiving concave portion is aligned with the locking member, the driving assembly is located at the position of avoiding the locking member, a part of the locking member is configured to stretch into the receiving concave portion, and the locking member is switched from a locking position to an unlocking position, and while the receiving concave portion is misaligned with the locking member, the drive assembly is located at the position of stopping the locking member, the locking member is stopped by the cam and may not be stretched into the receiving concave portion, and the locking member is kept at the locking position.

In an optional embodiment, the locking blade has a groove into which the locking member is stretched, and while the groove is misaligned with the locking member, the locking member may not be stretched into the groove, the locking blade stops the movement of the locking member, and the locking member is kept at the locking position, and while the unlocking key drives the locking blade to move until the groove is aligned with the locking member, a part of the locking member is configured to stretch into the groove, and the locking member is switched from the locking position to the unlocking position.

In an optional embodiment, the lock cylinder further includes a resetting member, and both ends of the resetting member abut against the locking member and the lock core respectively, and provide the locking member with a resetting force for switching to the locking position.

In an optional embodiment, the lock cylinder has an unlocking hole, the locking blade, the driving control blade and the emergency unlocking blade are all communicated with the unlocking hole, and the driving assembly is separated from the unlocking hole.

According to an optional embodiment of the present invention, an unlocking key is provided, including: a normal unlocking key, herein the normal unlocking key has a mechanical tooth profile that cooperates with the locking blade and the driving control blade of the lock cylinder, and a matching assembly that cooperates with the driving assembly of the lock cylinder and may supply power to the driving assembly; and an emergency unlocking key, herein the emergency unlocking key has the same mechanical tooth profile as the normal unlocking key, and an emergency unlocking tooth profile that cooperates with the emergency unlocking blade of the lock cylinder.

A technical scheme of the present invention is applied, the locking blade and the driving assembly are arranged, and both the locking blade and the driving assembly have a control effect on the locking member. While any one of the locking blade and the driving assembly stops the movement of the locking member, the locking member is locked at the locking position, and the lock cylinder remains locked. Only while the locking blade and the driving assembly both avoid the movement of the locking member, the locking member may be moved from the locking position to the unlocking position, and the lock cylinder may be unlocked, so both the locking blade and the driving assembly may play a locking role, the mechanical locking is achieved by the locking blade, and the electronic locking is achieved by the driving assembly, thereby the effect of double locking is achieved, and the security of the lock cylinder is improved. At the same time, the driving control blade is also arranged, and the driving control blade controls whether the driving assembly may be moved. While the unlocking key is not inserted into the lock cylinder, the driving control blade is located at the stopping position, and the driving control blade stops the movement of a movable part of the driving assembly on the movement path, thereby the driving assembly may not be moved, and the locking member may not be unlocked, so the lock cylinder remains locked. While the unlocking key is inserted into the unlocking lock cylinder, the unlocking key pushes the locking blade and the driving control blade to move, the locking blade is moved to the position of avoiding the locking member so as to achieve the preliminary unlocking, the driving control blade is moved from the stopping position to the avoiding position, the driving control blade no longer hinders the movement of the driving assembly, the driving assembly may be moved freely, and the unlocking key supplies power to the driving assembly. After the matching is successful, the driving assembly is moved to the position of avoiding the locking member, the full unlocking is achieved, so that the movement of the driving assembly may be controlled, a situation that the driving assembly is accidently unlocked is avoided, and the security of the lock cylinder is further improved. In addition, the unlocking hole of the lock cylinder only has the relevant parts of the locking blade, the driving control blade and the emergency unlocking blade, and the parts of the driving assembly are not involved, thereby the possibility of being cracked is reduced, and the security of the lock cylinder is further improved. At the same time, the emergency unlocking blade is also arranged, and the lock may be unlocked by the emergency unlocking key while the driving assembly is faulty or a power supply function is faulty.

### Brief Description of the Drawings

Drawings of the description for constituting a part of the present invention are used to provide further understanding of the present invention, and exemplary embodiments of the present invention and descriptions thereof are used to explain the present invention, and do not constitute improper limitation to the present invention. In the drawings:
Fig. 1 shows a structure schematic diagram of a normal unlocking key of the present invention inserted into a lock cylinder.
Fig. 2 shows a structure schematic diagram of the lock cylinder in Fig. 1 without a lock housing.
Fig. 3 shows a structure schematic diagram of a driving control blade and a driving assembly while the normal unlocking key in Fig. 2 does not push the driving control blade.
Fig. 4 shows a structure schematic diagram of the driving control blade and the driving assembly while the normal unlocking key in Fig. 2 pushes the driving control blade.
Fig. 5 shows a structure schematic diagram of the driving control blade pushed by the normal unlocking key in Fig. 2.
Fig. 6 shows a cross-sectional view of the driving control blade and an emergency unlocking blade in Fig. 2.
Fig. 7 shows a structure schematic diagram of a stopping portion and a stopping protrusion while the lock cylinder in Fig. 1 is unlocked.
Fig. 8 shows a structure schematic diagram of the stopping portion pressing the stopping protrusion to rotate while the lock cylinder in Fig. 1 is reset.
Fig. 9 shows a structure schematic diagram of the emergency unlocking key of the present invention inserted into the lock cylinder.
Fig. 10 shows a structure schematic diagram of the lock cylinder in Fig. 9 without the lock housing.
Fig. 11 shows a structure schematic diagram of internal members of the lock cylinder while the emergency unlocking key in Fig. 10 does not unlock the lock cylinder.
Fig. 12 shows a structure schematic diagram of the internal members of the lock cylinder while the emergency unlocking key in Fig. 10 unlocks the lock cylinder.
Fig. 13 shows a structure schematic diagram of the emergency unlocking blade and the stopping protrusion while the emergency unlocking key in Fig. 10 does not unlock the lock cylinder.
Fig. 14 shows a bottom view of Fig. 13.
Fig. 15 shows a structure schematic diagram of the emergency unlocking blade and the stopping protrusion while the emergency unlocking key in Fig. 10 unlocks the lock cylinder.
Fig. 16 shows a bottom view of Fig. 15.

Herein, the above drawings include the following reference signs:
10. Lock housing; 20. Lock core; 30. Locking member; 40. Locking blade; 41. Groove; 50. Driving assembly; 51. Driving motor; 52. Cam; 521. Stopping protrusion; 522. Receiving concave portion; 60. Driving control blade; 61. Stopping portion; 611. Inclined surface structure; 62. Driving end; 70. Emergency unlocking blade; 71. Extension arm; 711. Pressing inclined surface; 80. Resetting member; 90. Normal unlocking key; 91. Mechanical tooth profile; 100. Emergency unlocking key; and 101. Emergency unlocking tooth profile.

### Detailed Description of the Embodiments

It should be noted that embodiments in the present invention and features in the embodiments may be combined with each other in the case without conflicting. The present invention is described in detail below with reference to drawings and in combination with the embodiments.

In order to solve a problem in a related art that the security of the lock cylinder is relatively low, the present invention provides a lock cylinder and an unlocking key.

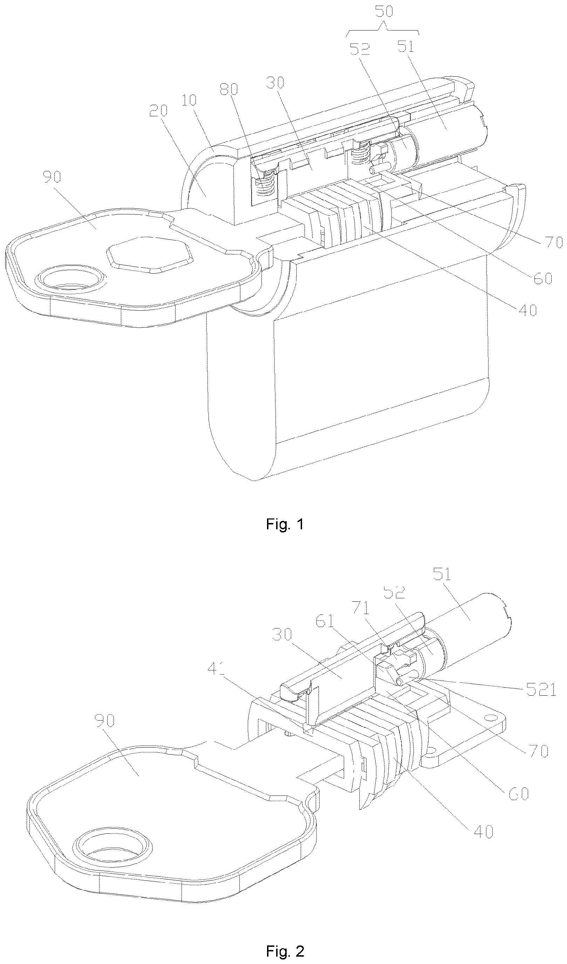

A lock cylinder as shown in Figs. 1 to 8 includes a lock housing 10, a lock core 20, a locking member 30, a locking blade 40, a driving assembly 50 and a driving control blade 60. The lock core 20 is rotatably arranged in the lock housing 10; the locking member 30 is movably arranged between the lock core 20 and the lock housing 10, and has a locking position and an unlocking position, while the locking member 30 is located at the locking position, a part of the locking member 30 is stretched into the lock housing 10, and another part of the locking member 30 is stretched into the lock core 20, as to hinder the relative rotation between the lock housing 10 and the lock core 20, and while the locking member 30 is located at the unlocking position, the locking member 30 exits from the lock housing 10 and is retracted into the lock core 20, and the lock housing 10 and the lock core 20 may be relatively rotated; the locking blade 40 is movably connected to the lock core 20, and capable of stopping or avoiding the movement of the locking member 30, as to lock or unlock the locking member 30; at least part of the driving assembly 50 is movably arranged relative to the locking member 30, and capable of stopping or avoiding the movement of the locking member 30, as to lock or unlock the locking member 30; and the driving control blade 60 is movably connected with the lock core 20, and the driving control blade 60 has a stopping position and an avoiding position, and while the driving control blade 60 is located at the stopping position, the driving control blade 60 stops the movement of the driving assembly 50, as to lock the driving assembly 50 in the position of stopping the locking member 30, and while the driving control blade 60 is located at the avoiding position, the driving control blade 60 avoids the movement of the driving assembly 50, so that the driving assembly 50 is moved freely.

In this embodiment, the locking blade 40 and the driving assembly 50 are arranged, and both the locking blade 40 and the driving assembly 50 have a control effect on the locking member 30. While any one of the locking blade 40 and the driving assembly 50 stops the movement of the locking member 30, the locking member 30 is locked at the locking position, and the lock cylinder remains locked. Only while the locking blade 40 and the driving assembly 50 both avoid the movement of the locking member 30, the locking member 30 may be moved from the locking position to the unlocking position, and the lock cylinder may be unlocked, so both the locking blade 40 and the driving assembly 50 may play a locking role, the mechanical locking is achieved by the locking blade 40, and the electronic locking is achieved by the driving assembly 50, thereby the effect of double locking is achieved, and the security of the lock cylinder is improved. At the same time, the driving control blade 60 is also arranged, and the driving control blade 60 controls whether the driving assembly 50 may be moved. While the unlocking key is not inserted into the lock cylinder, the driving control blade 60 is located at the stopping position, and the driving control blade 60 stops the movement of a movable part of the driving assembly 50 on the movement path, thereby the driving assembly 50 may not be moved, and the locking member 30 may not be unlocked, so the lock cylinder remains locked. While the unlocking key is inserted into the unlocking lock cylinder, the unlocking key pushes the locking blade 40 and the driving control blade 60 to move, the locking blade 40 is moved to the position of avoiding the locking member 30 so as to achieve the preliminary unlocking, the driving control blade 60 is moved from the stopping position to the avoiding position, the driving control blade 60 no longer hinders the movement of the driving assembly 50, the driving assembly 50 may be moved freely, and the unlocking key supplies power to the driving assembly 50. After the matching is successful, the driving assembly 50 is moved to the position of avoiding the locking member 30, the full unlocking is achieved, so that the movement of the driving assembly 50 may be controlled, a situation that the driving assembly 50 is accidently unlocked is avoided, and the security of the lock cylinder is further improved. In addition, the unlocking hole of the lock cylinder only has the parts related to the blade, and the parts of the driving assembly 50 are not involved, while a foreign object is stretched into from the unlocking hole, it may not touch the driving assembly 50, thereby the possibility of being cracked is reduced, and the security of the lock cylinder is further improved.

It should be noted that the lock cylinder of this embodiment does not have a power source, and the driving assembly 50 is powered by the unlocking key. In this way, there is no need to install the power source in the lock cylinder, and a process of frequently charging or replacing a battery is eliminated, so the volume of the lock cylinder is reduced, and it is beneficial to the miniaturization of the lock cylinder.

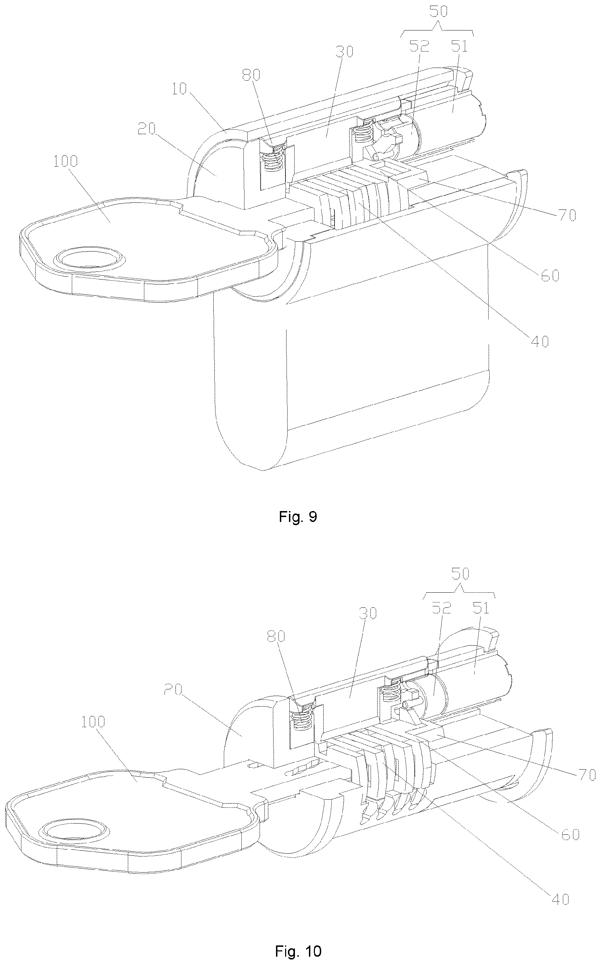

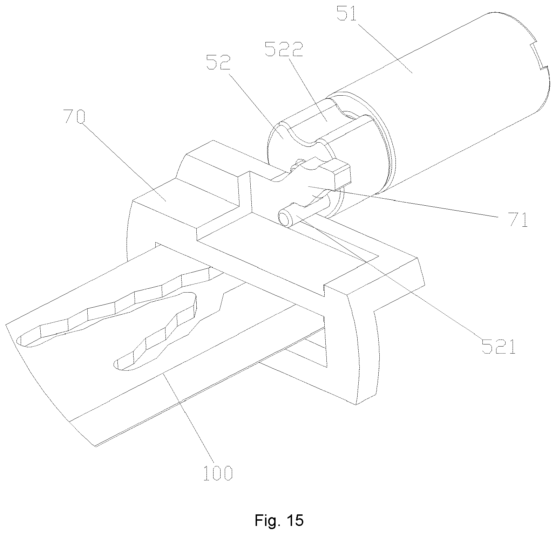

As shown in Figs. 9 to 16, the lock cylinder further includes an emergency unlocking blade 70, the emergency unlocking blade 70 is movably arranged in the lock core 20 and may press the driving assembly 50, as to drive the driving assembly 50 to be switched from the position of stopping the locking member 30 to the position of avoiding the locking member 30, so that the lock cylinder has an emergency unlocking function.

In this embodiment, the driving assembly 50 includes a driving motor 51 and a cam 52, herein an end surface of the cam 52 has an eccentrically arranged protrusion as a stopping protrusion 521, and a circumferential surface of the cam 52 has a receiving concave portion 522 into which the locking member 30 is inserted, the cam 52 is drivingly connected with the driving motor 51, the driving motor 51 may drive the cam 52 to rotate and switch the receiving concave portion 522 between positions aligned and misaligned with the locking member 30, and while the receiving concave portion 522 is aligned with the locking member 30, the driving assembly 50 is located at the position of avoiding the locking member 30, a part of the locking member 30 may be stretched into the receiving concave portion 522, the locking member 30 is switched from the locking position to the unlocking position, and the lock cylinder is unlocked; and while the receiving concave portion 522 is misaligned with the locking member 30, the driving assembly 50 is located at the position of stopping the locking member 30, the locking member 30 is stopped by the cam 52 and may not be stretched into the receiving concave portion 522, the locking member 30 is kept at the locking position, and the lock cylinder remains locked. A ring-shaped outer edge of the emergency unlocking blade 70 is connected to an extension arm 71, the extension arm 71 has a pressing inclined surface 711 that contacts and cooperates with the stopping protrusion 521, and while unlocking key drives the emergency unlocking blade 70 to move, the pressing inclined surface 711 presses the stopping protrusion 521, thereby the cam 52 is driven to be rotated to the position in which the receiving concave portion 522 is aligned with the locking member 30. In this way, the change of a state of the driving assembly 50 is achieved without power supply, but it is achieved by a mode of mechanical driving. Even if a power supply part of the unlocking key fails, the driving assembly 50 may be driven to the position of avoiding the locking member 30 by the mode of mechanical driving, and then the full unlocking of the lock cylinder may be achieved by unlocking the locking blade 40 only.

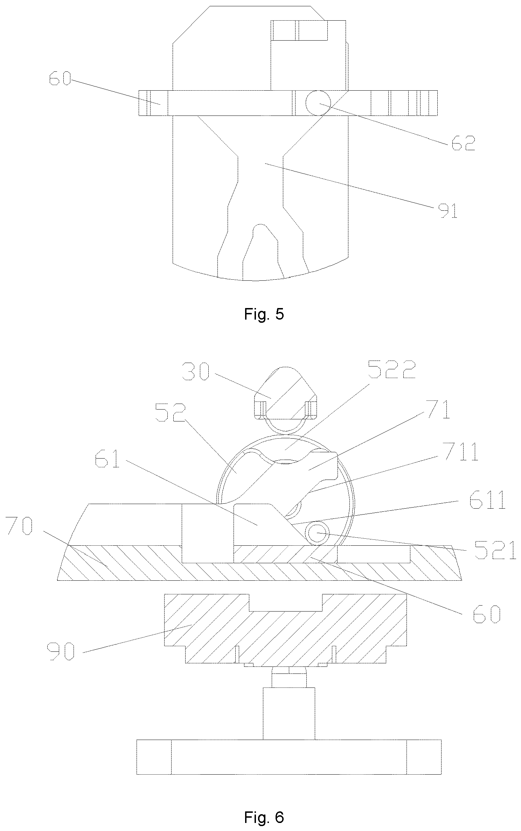

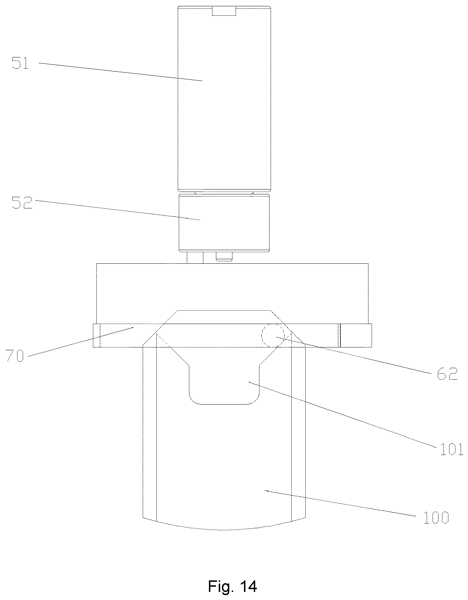

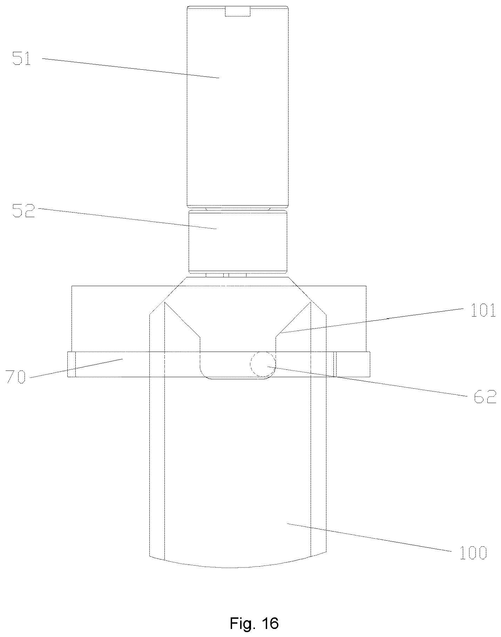

Correspondingly, in order to be compatible with the function of the lock cylinder, the unlocking key includes two types: a normal unlocking key 90 and an emergency unlocking key 100. The normal unlocking key 90 has a mechanical tooth profile 91 that cooperates with the locking blade 40 and the driving control blade 60 of the lock cylinder, as shown in Fig. 5, and a matching assembly that cooperates with the driving assembly 50 of the locking cylinder and may supply power to the driving motor 51. During normal use, the lock cylinder may be unlocked by the normal unlocking key 90. The emergency unlocking key 100 has the same mechanical tooth profile 91 as the normal unlocking key 90, and an emergency unlocking tooth profile 101 that cooperates with the emergency unlocking blade 70 of the lock cylinder. The emergency unlocking key 100 and the normal unlocking key 90 have the same mechanical tooth profile 91. Only in this way, the locking blade 40 and the driving control blade 60 may be unlocked by the emergency unlocking key 100. The biggest difference between the emergency unlocking key 100 and the normal unlocking key 90 is that the matching assembly in the normal unlocking key 90 has a power source, so that it may supply power to the driving motor 51 after the matching is successful, the electric unlocking is achieved, it may not affect the emergency unlocking blade 70, and the emergency unlocking tooth profile 101 of the emergency unlocking key 100 is cooperated with the emergency unlocking blade 70, as shown in Figs. 14 and 16, the rotation of the cam 52 is achieved by pushing the emergency unlocking blade 70, thereby the driving assembly 50 is driven to the position of avoiding the locking member 30, and the mechanical unlocking is achieved. Since the emergency unlocking key 100 is a mechanical unlocking driving assembly 50, a matching assembly is not necessarily arranged therein.

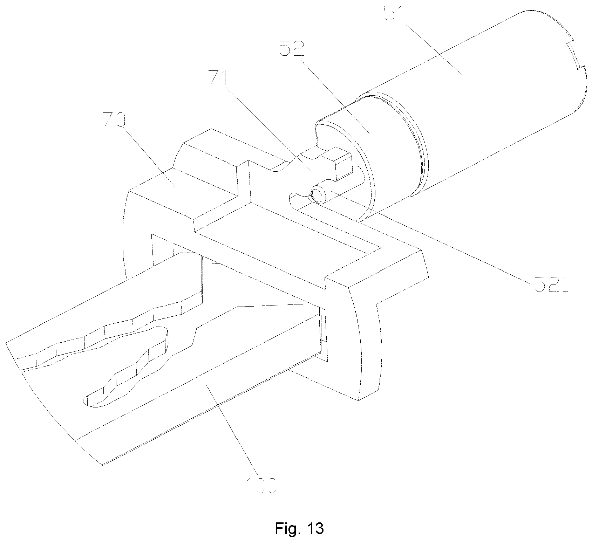

As shown in Figs. 13 to 16, the extension arm 71 is arranged slantwise relative to the driving control blade 60, a first end of the extension arm 71 is connected with an outer edge of the emergency unlocking blade 70, and a second end of the extension arm 71 is extended towards a direction away from the outer edge of the emergency unlocking blade 70, thereby a gap is formed between the extension arm 71 and the outer edge of the emergency unlocking blade 70, the stopping protrusion 521 is located in the gap, and an inner wall surface, closes to the gap, of the extension arm 71 serves as a pressing inclined surface 711, as shown in Fig. 6. The pressing inclined surface 711 is extended to both ends of the extension arm 71, and while the emergency unlocking key 100 is not inserted into the lock cylinder, the pressing inclined surface 711 at the second end of the extension arm 71 on the emergency unlocking blade 70 contacts with the stopping protrusion 521, and while the emergency unlocking key 100 is inserted into the lock cylinder, the emergency unlocking key 100 pushes the emergency unlocking blade 70 to move, and the pressing inclined surface 711 presses the stopping protrusion 521, so that the stopping protrusion 521 is moved from the second end to the first end relative to the extension arm 71, the cam 52 is rotated, and the receiving concave portion 522 is aligned with the locking member 30, so that the driving assembly 50 is switched to the position of avoiding the locking member 30. Certainly, the above arrangement mode may also be changed according to actual conditions such as an arrangement position and an arrangement direction of the emergency unlocking blade 70.

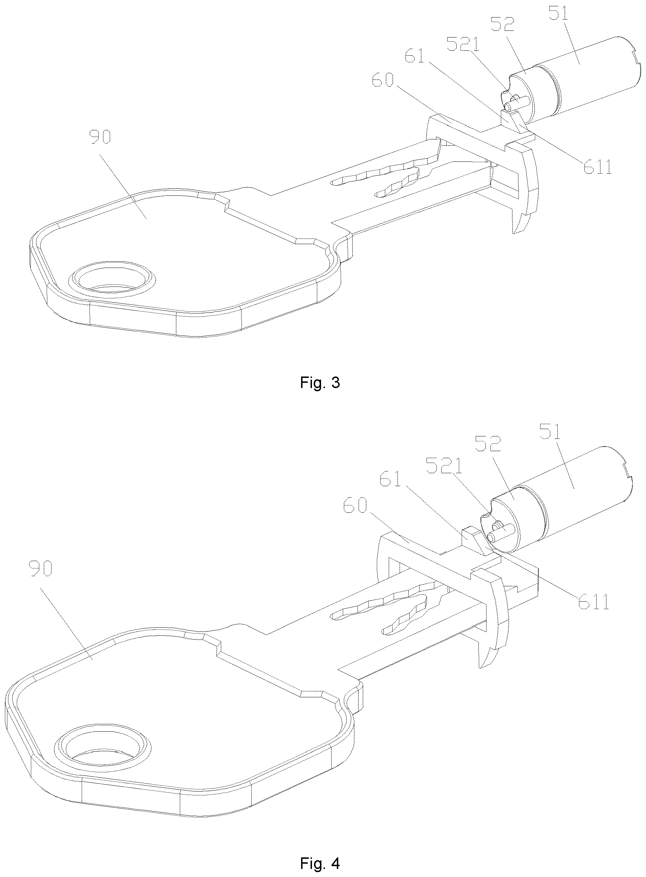

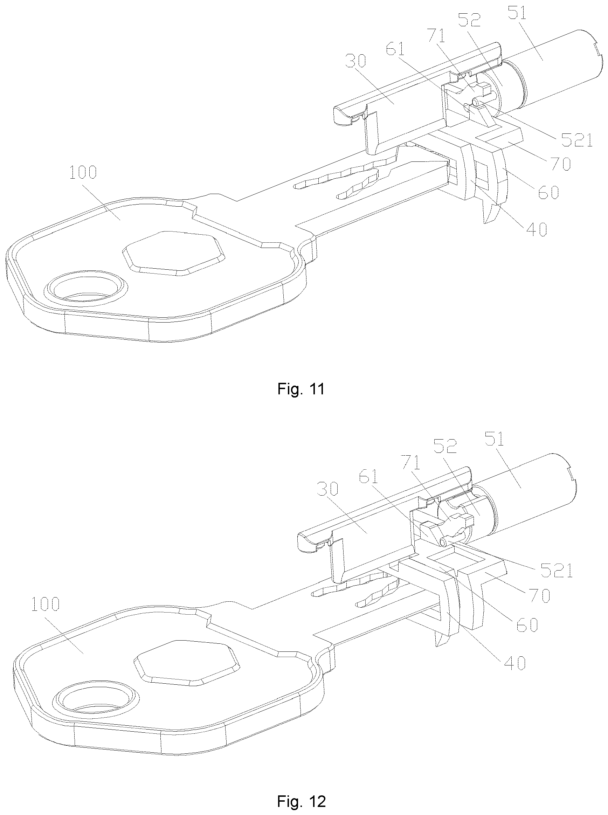

In addition to the cooperation relationship between the emergency unlocking blade 70 and the stopping protrusion 521 of the driving assembly 50, the driving control blade 60 and the stopping protrusion 521 also have the cooperation relationship. The driving control blade 60 has a stopping portion 61, the stopping portion 61 may be moved to a movement path of the stopping protrusion 521 or avoid the movement path of the stopping protrusion 521. While the driving control blade 60 is located at the stopping position, the stopping portion 61 is located on the movement path of the stopping protrusion 521, as to hinder the rotation of the cam 52, as shown in Figs. 3 and 11; and while the unlocking key drives the driving control blade 60 to move to the avoiding position, the stopping portion 61 no longer hinders the movement of the stopping protrusion 521, the cam 52 may be rotated freely, as shown in Figs 4 and 12. The driving control blade 60, the emergency unlocking blade 70 and the locking blade 40 are arranged in parallel and are all slidably arranged in the lock core 20. Because both the driving control blade 60 and the emergency locking blade 40 have a contact relationship with the stopping protrusion 521, while these two components are arranged, the attention should be paid to the interference condition between the components and the interference condition between these two components and other components. In this embodiment, the stopping portion 61 and the extension arm 71 are respectively arranged at two opposite sides of the stopping protrusion 521, not only the mutual interference between the two is avoided, but also a space in the lock core 20 is fully used, the effect of increasing blades on the volume of the lock cylinder is reduced, and it is beneficial to the miniaturization of the lock cylinder. In addition, because a part of the extension arm 71 of this embodiment is coincided with the receiving concave portion 522 on the cam 52, the extension arm 71 may interfere with the locking member 30, thus a recessed structure is further arranged on the extension arm 71, as shown in Fig. 6, the projection of the recessed structure on the end surface of the cam 52 is coincided with the receiving concave portion 522, as to guarantee that the extension arm 71 may not affect the movement of the locking member 30.

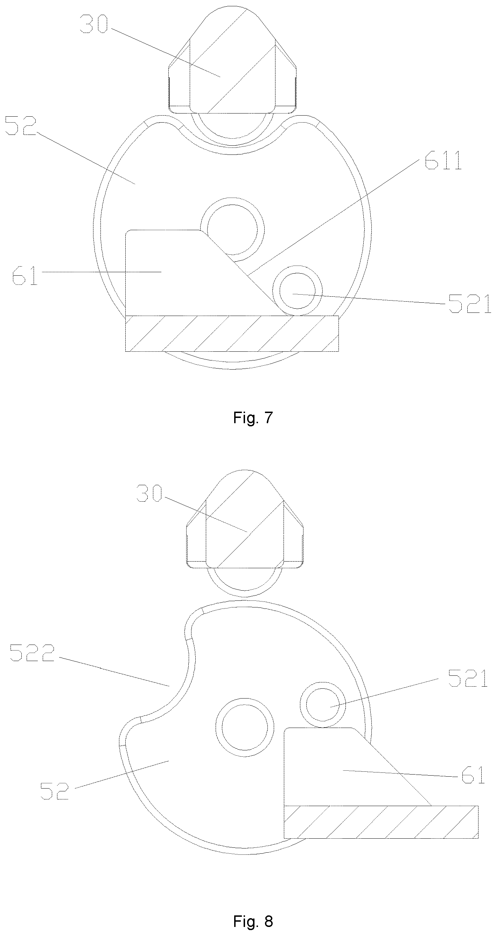

Similar to the pressing inclined surface 711 on the extension arm 71, the stopping portion 61 also has an inclined surface structure 611, as shown in Figs 7 and 8, while the unlocking key is pulled out of the lock cylinder, the driving control blade 60 is moved from the avoiding position to the stopping position under the action of a blade spring, the inclined surface structure 611 presses the stopping protrusion 521, so that the cam 52 is reversely rotated, the receiving concave portion 522 is misaligned with the locking member 30 again, and the driving assembly 50 is moved to the position of stopping the locking member 30 again, so that the lock cylinder may achieve the automatic locking and resetting while the unlocking key is pulled out of the lock cylinder. In addition, a plane is arranged in a position, close to an axis of the cam 52, of the inclined surface structure 611, the plane is connected to the inclined surface structure 611 and is parallel to a sliding direction of the driving control blade 60. While the driving control blade 60 is located at the stopping position, the plane abuts against the stopping protrusion 521, and the plane hinders the movement of the stopping protrusion 521, so that the cam 52 may not be rotated. Preferably, while the stopping protrusion 521 abuts on the plane, the plane is perpendicular to a movement track line of the stopping protrusion 521, as to guarantee the stopping effect of the stopping portion 61.

In this embodiment, both the driving control blade 60 and the emergency unlocking blade 70 have a blade unlocking hole into which the unlocking key is inserted and a driving end 62 located in the blade unlocking hole. The normal unlocking key 90 may press the driving end 62 on the driving control blade 60 while inserted into the lock cylinder, as to drive the driving control blade 60 to move, and while the emergency unlocking key 100 is inserted into the lock cylinder, it may press the driving end 62 on the driving control blade 60 and the driving end 62 on the emergency unlocking blade 70, as to drive the driving control blade 60 and the emergency unlocking blade 70 to move.

Optionally, the driving ends 62 on the driving control blade 60 and the emergency unlocking blade 70 are located on the same side of a circumferential of an inner wall of the blade unlocking hole or respectively located on two opposite sides of the circumferential of the inner wall of the blade unlocking hole. The blade unlocking hole in this embodiment is square, and preferably, the driving ends 62 on the driving control blade 60 and the emergency unlocking blade 70 are respectively located on the two opposite sides of the circumferential of the inner wall of the blade unlocking hole, namely, respectively located on an upper inner wall and a lower inner wall of the blade unlocking hole. In this way, the emergency unlocking key 100 needs to be provided with corresponding structures on both surfaces, thereby the complexity of the emergency unlocking key 100 is increased, and the security is improved.

As shown in Fig. 1, the locking blade 40 has a groove 41 into which the locking member 30 is inserted. While the groove 41 is misaligned with the locking member 30, the locking member 30 may not be stretched into the groove 41, the locking blade 40 stops the movement of the locking member 30, and the locking member 30 is kept at the locking position. While the unlocking key drives the locking blade 40 to move until the groove 41 is aligned with the locking member 30, a part of the locking member 30 may be stretched into the groove 41, and the locking member 30 is switched from the locking position to the unlocking position.

In this embodiment, the lock cylinder further includes a resetting member 80, both ends of the resetting member 80 respectively abut against the locking member 30 and the lock core 20, and provide the locking member 30 with a resetting force for switching to the locking position. The resetting member 80 is preferably a linear spring, and the linear spring may make the locking member 30 always have a movement tendency to stretch into the lock housing 10. After the lock cylinder is fully unlocked, the lock cylinder is rotated by the unlocking key, and the lock housing 10 may press the locking member 30 at this time, so that the locking member 30 exits from the lock housing 10. One or more resetting members 80 may be provided as required, as to guarantee that the locking member 30 is subjected to a uniform force.

Preferably, one end, stretched into the lock housing 10, of the locking member 30 has an inclined surface. Correspondingly, a concave portion, receiving the locking member 30, of the lock housing 10 also has an inclined surface cooperated with the inclined surface. In this way, after the lock cylinder is fully unlocked, while the lock cylinder is rotated, the lock housing 10 may smoothly press the locking member 30, so that the locking member 30 exits from the lock housing 10.

Optionally, the part, stretched into the receiving concave portion 522, of the locking member 30 is set as a semicircular shape, as shown in Figs. 6 and 7. Correspondingly, the receiving concave portion 522 is set as a semicircular shape. In this way, while the driving control blade 60 presses the stopping protrusion 521 so that the cam 52 is reversely rotated, the receiving concave portion 522 may smoothly press the locking member 30 so that the locking member 30 exits from the receiving concave portion 522. Certainly, it may also be set as other shapes such as a cone as required.

In this embodiment, the lock cylinder has an unlocking hole, the locking blade 40, the driving control blade 60 and the emergency unlocking blade 70 are all communicated with the unlocking hole, and the driving assembly 50 is separated from the unlocking hole. In this way, the unlocking hole of the lock cylinder only has the relevant parts of the blade, and the parts of the driving assembly 50 are not involved. While the lock cylinder is pried, a foreign object may not touch the driving assembly 50 after entering from the unlocking hole, and it may not toggle the driving assembly 50 to move, thereby the security of the lock cylinder is further improved.

This embodiment further provides an unlocking key, including the above normal unlocking key 90 and emergency unlocking key 100. It should be supplemented that for the emergency unlocking key 100, it not only needs to cooperate with the locking blade 40 and the driving control blade 60, but also cooperates with the emergency unlocking blade 70, so the arrangement position of the corresponding structure of the emergency unlocking key 100 should be matched with the locking blade 40, the driving control blade 60 and the emergency unlocking blade 70, for example, while the driving ends 62 on the driving control blade 60 and the emergency unlocking blade 70 are located on the same side of the blade unlocking hole, the mechanical tooth profile 91 and the emergency unlocking tooth profile 101 on the emergency unlocking key 100 should also be arranged on the same unlocking surface. While the driving ends 62 on the driving control blade 60 and the emergency unlocking blade 70 are respectively located on two opposite sides of the blade unlocking hole, the mechanical tooth profile 91 and the emergency unlocking tooth profile 101 on the emergency unlocking key 100 should also be arranged on two unlocking surfaces.

It should be noted that multiple in the above embodiment refers to at least two.

It may be seen from the above descriptions that the above embodiments of the present invention achieve the following technical effects:
1. The problem in the existing technology that the security of the lock cylinder is relative low is solved.
2. Both the locking blade and the driving assembly may lock the locking member to achieve the double locking, and the action of the driving assembly is controlled by the driving control blade, so the security of the lock cylinder is improved.
3. The emergency unlocking blade may achieve the movement of the driving assembly under special circumstances, as to avoid the situation that the lock cylinder may not be unlocked normally while the unlocking key is out of power or error, and while the motor fails.
4. During the process that the unlocking key is pulled out of the lock cylinder, the lock cylinder as a whole may achieve a machinist-style automatic reset, the electricity is saved, and the power consumption is low.
5. There are only the relevant parts of the blade in the unlocking hole of the lock cylinder, and the parts of the driving assembly are not involved, as to avoid the lock cylinder from being pried, the security is guaranteed.

Apparently, the embodiments described above are only a part of the embodiments of the present invention, rather than all of the embodiments. Based on the embodiments in the present invention, all other embodiments obtained by those of ordinary skill in the art without creative work should fall within a scope of protection of the present invention.

The above are only preferred embodiments of the present invention, and are not intended to limit the present invention. For those skilled in the art, the present invention may have various modifications and changes. Any modifications, equivalent replacements, improvements and the like made within the spirit and principle of the present invention shall be included in the scope of protection of the present invention.

## Claims

1. A lock cylinder, comprising:
a lock housing (10);
a lock core (20), wherein the lock core (20) is rotatably arranged in the lock housing (10);
a locking member (30), wherein the locking member (30) is movably arranged between the lock core (20) and the lock housing (10) and provided with a locking position and an unlocking position, while the locking member (30) is located at the locking position, a part of the locking member (30) is stretched into the lock housing (10), and another part of the locking member (30) is stretched into the lock core (20), as to hinder a relative rotation between the lock housing (10) and the lock core (20), and while the locking member (30) is located at the unlocking position, the locking member (30) exits from the lock housing (10), and is retracted into the lock core (20), and the lock housing (10) and the lock core (20) is configured to rotate relative to each other; a locking blade (40), wherein the locking blade (40) is movably connected to the lock core (20) and capable of stopping or avoiding a movement of the locking member (30) so as to lock or unlock the locking member (30);
a driving assembly (50), wherein at least part of the driving assembly (50) is movably arranged relative to the locking member (30), and capable of stopping or avoiding the movement of the locking member (30) so as to lock or unlock the locking member (30); and
a driving control blade (60), wherein the driving control blade (60) is movably connected to the lock core (20), and the driving control blade (60) is provided with a stopping position and an avoiding position, while the driving control blade (60) is located at the stopping position, the driving control blade (60) stops the movement of the driving assembly (50), as to lock the driving assembly (50) in the position of stopping the locking member (30), and while the driving control blade (60) is located at the avoiding position, the driving control blade (60) avoids the movement of the driving assembly (50), so that the driving assembly (50) is moved freely.

2. The lock cylinder according to claim 1, wherein the lock cylinder further comprises an emergency unlocking blade (70), and the emergency unlocking blade (70) is movably arranged in the lock core (20) and is configured to press the driving assembly (50), as to drive the driving assembly (50) to be switched from the position of stopping the locking member (30) to the position of avoiding the locking member (30).

3. The lock cylinder according to claim 2, wherein the driving assembly (50) is provided with a stopping protrusion (521), and the emergency unlocking blade (70) is provided with an extension arm (71), and the extension arm (71) is configured to press the stopping protrusion (521), as to move the driving assembly (50) to the position of avoiding the locking member (30).

4. The lock cylinder according to claim 3, wherein the extension arm (71) has a pressing inclined surface (711) which contacts and cooperates with the stopping protrusion (521), and while the unlocking key drives the emergency unlocking blade (70) to move, the pressing inclined surface (711) presses the stopping protrusion (521), as to drive the driving assembly (50) to move to the position of avoiding the locking member (30).

5. The lock cylinder according to claim 4, wherein a first end of the extension arm (71) is connected to an outer edge of the emergency unlocking blade (70), and a second end of the extension arm (71) is extended towards a direction away from the outer edge of the emergency unlocking blade (70), and a gap is formed between the extension arm (71) and the outer edge of the emergency unlocking blade (70), the stopping protrusion (521) is located in the gap, and an inner wall surface, close to the gap, of the extension arm (71) serves as the pressing inclined surface (711).

6. The lock cylinder according to claim 1, wherein the driving assembly (50) is provided with the stopping protrusion (521), the driving control blade (60) is provided with a stopping portion (61), and while the driving control blade (60) is located at the stopping position, the stopping portion (61) is located on a movement path of the stopping protrusion (521), as to hinder the movement of the driving assembly (50), and while the unlocking key drives the driving control blade (60) to move to the avoiding position, the stopping portion (61) no longer hinders the movement of the stopping protrusion (521), and the driving assembly (50) is configured to rotate freely.

7. The lock cylinder according to claim 6, wherein the stopping portion (61) has an inclined surface structure (611), and while the driving control blade (60) is moved from the avoiding position to the stopping position, the inclined surface structure (611) presses the stopping protrusion (521), as to move the driving assembly (50) to the position of stopping the locking member (30).

8. The lock cylinder according to claim 2, wherein both the driving control blade (60) and the emergency unlocking blade (70) have a blade unlocking hole into which the unlocking key is inserted and a driving end (62) located in the blade unlocking hole, the unlocking key is inserted into the blade unlocking hole and presses the driving end (62), as to drive at least one of the driving control blade (60) and the emergency unlocking blade (70) to move.

9. The lock cylinder according to claim 8, wherein the driving ends (62) of the driving control blade (60) and the emergency unlocking blade (70) are located on a same side of a circumferential of an inner wall of the blade unlocking hole or respectively located on two opposite sides of the circumferential of the inner wall of the blade unlocking hole.

10. The lock cylinder according to claim 1, wherein the driving assembly (50) comprises:
a driving motor (51); and
a cam (52), wherein the cam (52) has a stopping protrusion (521), a circumferential surface of the cam (52) has a receiving concave portion (522) into which the locking member (30) is stretched, the cam (52) is drivingly connected with the driving motor (51), the driving motor (51) drives the cam (52) to rotate, and the receiving concave portion (522) is switched between positions aligned and misaligned with the locking member (30), and while the receiving concave portion (522) is aligned with the locking member (30), the driving assembly (50) is located at the position of avoiding the locking member (30), a part of the locking member (30) is configured to stretch into the receiving concave portion (522), and the locking member (30) is switched from the locking position to the unlocking position, and while the receiving concave portion (522) is misaligned with the locking member (30), the drive assembly (50) is located at the position of stopping the locking member (30), the locking member (30) is stopped by the cam (52) and cannot be stretched into the receiving concave portion (522), and the locking member (30) is kept at the locking position.

11. The lock cylinder according to claim 1, wherein the locking blade (40) has a groove (41) into which the locking member (30) is stretched, and while the groove (41) is misaligned with the locking member (30), the locking member (30) cannot be stretched into the groove (41), the locking blade (40) stops the movement of the locking member (30), and the locking member (30) is kept at the locking position, and while the unlocking key drives the locking blade (40) to move until the groove (41) is aligned with the locking member (30), a part of the locking member (30) is configured to stretch into the groove (41), and the locking member (30) is switched from the locking position to the unlocking position.

12. The lock cylinder according to claim 1, wherein the lock cylinder further comprises a resetting member (80), and both ends of the resetting member (80) abut against the locking member (30) and the lock core (20) respectively, and provide the locking member (30) with a resetting force for switching to the locking position.

13. The lock cylinder according to claim 2, wherein the lock cylinder has an unlocking hole, the locking blade (40), the driving control blade (60) and the emergency unlocking blade (70) are all communicated with the unlocking hole, and the driving assembly (50) is separated from the unlocking hole.

14. An unlocking key, comprising:
a normal unlocking key (90), wherein the normal unlocking key (90) has a mechanical tooth profile (91) that cooperates with the locking blade (40) and the driving control blade (60) of the lock cylinder, and a matching assembly that cooperates with the driving assembly (50) of the lock cylinder and supply power to the driving assembly (50); and
an emergency unlocking key (100), wherein the emergency unlocking key (100) has the same mechanical tooth profile (91) as the normal unlocking key (90), and an emergency unlocking tooth profile (101) that cooperates with the emergency unlocking blade (70) of the lock cylinder.
